# EUROPEAN PATENT APPLICATION

(11) **EP 4 429 341 A1**
(43) Date of publication of application: **11.09.2024**
(21) Application number: 24158326.9
(22) Date of filing: 19.02.2024
(51) Int. Cl.: H04W 60/06, H04W 76/50

(54) **UE BEHAVIOR FOR COLLISION OF NETWORK-INITIATED DE-REGISTRATION AND EMERGENCY SERVICES**

(30) Priority: 06.03.2023 IN 202321014998; 24.03.2023 IN 202321021015; 05.02.2024 US 202418432127
(71) Applicant: MediaTek Singapore Pte. Ltd., Singapore 138628 (SG)
(72) Inventor: MOISANEN, Matti, Oulu (FI); Puneet, Bengaluru (IN)
(74) Representative: Hoefer & Partner Patentanwälte mbB

(57) **Abstract**

Solutions pertaining to user equipment, UE, behavior for collisions between network-initiated de-registration/detachment and emergency service procedures in mobile communications are proposed. An apparatus implemented in a UE determines that a mobility and periodic registration update, MRU, procedure or a service request, SR, procedure triggered for initiating an emergency protocol data unit, PDU, session collides with a network-initiated de-registration procedure while the UE interfaces with a network (310). In response to the determining, the apparatus performs one or more operations comprising a UE non-access-stratum, NAS, layer in a 5th Generation Mobility Management, 5GMM, protocol stack informing one or more upper layers of the 5GMM protocol stack of a failure of the corresponding procedure such that an upper layer of the 5GMM protocol stack initiates a mechanism for remedying the failure, or performing a local de-registration and attempting an initial registration for emergency services in the network (320).

## Description

### CROSS REFERENCE TO RELATED PATENT APPLICATION(S)

The present disclosure is part of a non-provisional application claiming the priority benefit of Indian Patent Application No. 202321014998, filed 6 March 2023, and Indian Patent Application No. 202321021015, filed 24 March 2023, the content of which herein being incorporated by reference in its entirety.

### TECHNICAL FIELD

The present disclosure is generally related to mobile communications and, more particularly, to user equipment (UE) behavior for collisions of network-initiated de-registration and emergency services.

### BACKGROUND

Under current 3GPP specification, in the event of a collision between the 5th Generation Mobility Management (5GMM) Registration procedure for mobility and periodic registration update (MRU) for emergency services and a network-initiated de-registration procedure, the MRU may be triggered for initiating an emergency protocol data unit (PDU) session or an emergency services fallback procedure. T24.501, section 5.5.1.3.7(g), titled "Abnormal cases in the UE, Registration procedure for mobility and periodic registration update and de-registration procedure collision" states that if the UE receives a DEREGISTRATION REQUEST message without 5GMM cause value #11, #12, #13 or #15 before the registration procedure for mobility and periodic registration update has been completed, the registration procedure for mobility and periodic registration update shall be aborted and the de-registration procedure shall progress.

This section further states that if the UE receives a DEREGISTRATION REQUEST message with 5GMM cause value #11, #12, #13, or #15 before the registration procedure for mobility and periodic registration update has been completed, the registration procedure for mobility and periodic registration update shall be progressed and the de-registration procedure shall be aborted.

Furthermore, in the event of 5GMM Service Request (SR) procedure for emergency services and network-initiated de-registration procedure collision, the SR can be triggered for initiating an emergency PDU session. TS24.501, section 5.6.1.7(f), titled "Abnormal cases in the UE, De-registration procedure collision" states that if the UE receives a DEREGISTRATION REQUEST message from the network in state 5GMM-SERVICE-REQUEST-INITIATED, the UE shall progress the DEREGISTRATION REQUEST message and the service request procedure shall be aborted.

However, in the event of a collision between a procedure triggered for initiating an emergency PDU session and a network-initiated de-registration procedure, UE procedural actions are not consistently specified. For example, as per TS24.501, it is specified that MRU and SR procedures will be aborted, but it is not clear if the upper layer should be informed about the failure of the triggered procedure for the emergency PDU session, regardless of whether the session is successfully established. Therefore, there is a need for solutions that specify UE behavior in the event of a collision between a procedure triggered for initiating an emergency PDU session and a network-initiated de-registration procedure.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the issue(s) described herein. More specifically, various schemes proposed in the present disclosure are believed to provide solutions involving techniques pertaining to UE behavior for collisions between network-initiated de-registration/detachment and emergency service procedures in mobile communications. Methods according to the invention are defined in the independent claims. The dependent claims define preferred embodiments thereof.

In one aspect, a method may include a UE determining that an MRU procedure triggered for initiating an emergency PDU session collides with a network-initiated de-registration procedure while interfacing with a network. The method may also include the UE, response to the determining, performing one or more operations comprising a UE non-access-stratum (NAS) layer in a 5th Generation Mobility Management (5GMM) protocol stack informing one or more upper layers of the 5GMM protocol stack of a failure of the MRU procedure such that an upper layer of the 5GMM protocol stack initiates a mechanism for remedying the failure, or performing a local de-registration and attempting an initial registration for emergency services in the network.

In another aspect, a method may include a UE determining that a SR procedure triggered for initiating an emergency PDU session collides with a network-initiated de-registration procedure while the UE interfaces with a network. The method may also include the UE, response to the determining, performing one or more operations comprising a UE NAS layer in a 5GMM protocol stack informing one or more upper layers of the 5GMM protocol stack of a failure of the SR procedure such that an upper layer of the 5GMM protocol stack initiates a mechanism for remedying the failure, or performing a local de-registration and attempting an initial registration for emergency services in the network.

In an additional aspect, a method may include a UE determining that an EPS mobility management (EMM) update procedure or an SR procedure triggered for initiating a packet data network (PDN) connection for emergency bearer services collides with a network-initiated detach procedure while the UE interfaces with the network. The method may also include the UE, response to the determining, performing one or more operations comprising a UE NAS layer in an EPS protocol stack informing one or more upper layers of the 5GMM protocol stack of a failure of the tracking area update procedure or the SR procedure such that an upper layer of the EPS protocol stack initiates a mechanism for remedying the failure, or performing a local detach and attempt an EPS attach for emergency bearer services in the network or an equivalent network.

It is noteworthy that, although the description provided herein may be in the context of certain radio access technologies, networks, and network topologies such as 5G/NR/Beyond Fifth-Generation (B5G) mobile communications, the proposed concepts, schemes and any variation(s)/derivative(s) thereof may be implemented in, for and by other types of radio access technologies, networks and network topologies such as, for example and without limitation, Long-Term Evolution (LTE), LTE-Advanced, LTE-Advanced Pro, Internet-of-Things (IoT), Narrow Band Internet of Things (NB-loT), Industrial Internet of Things (lIoT), vehicle-to-everything (V2X), and non-terrestrial network (NTN) communications. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a block diagram of an example communication system in accordance with an implementation of the present disclosure.
FIG. 3 is a flowchart of a first example process in accordance with an implementation of the present disclosure.
FIG. 4 is a flowchart of a second example process in accordance with an implementation of the present disclosure.
FIG. 5 is a flowchart of a third example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to UE behavior for collisions between network-initiated de-registration/detachment and emergency service procedures in mobile communications. According to the present disclosure, a number of possible solutions may be implemented separately or jointly. That is, although these possible solutions may be described below separately, two or more of these possible solutions may be implemented in one combination or another.

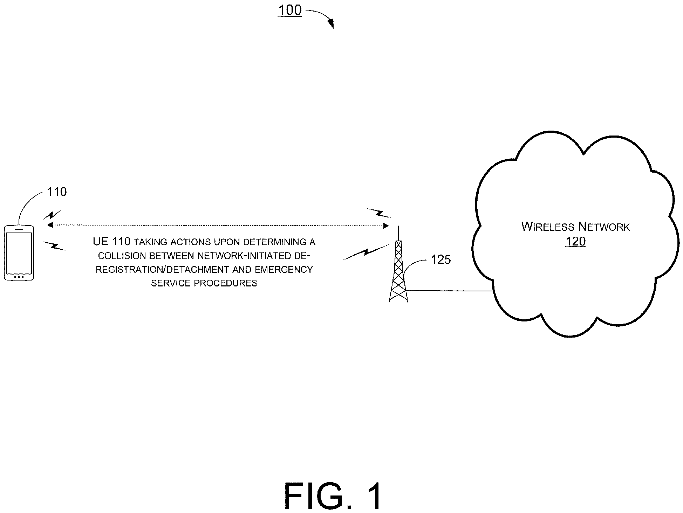

FIG. 1 illustrates an example network environment 100 in which various solutions and schemes in accordance with the present disclosure may be implemented. Referring to FIG. 1, network environment 100 may involve a UE 110 in wireless communication with a wireless network 120 (e.g., a 5G NR mobile network) as part of a communication network. UE 110 may initially be in wireless communication with wireless network 120 via a base station or network node 125 (e.g., an eNB, gNB or transmit-receive point (TRP)). In network environment 100, UE 110 and network 120 may implement various schemes pertaining to UE behavior for collisions between network-initiated de-registration/detachment and emergency service procedures in mobile communications in accordance with the present disclosure, as described herein.

Under the current 3GPP specification, UE behavior is specified for collisions between some registration or service procedures and a network-initiated de-registration procedure. However, UE behavior may not be specified for other collision scenarios. In one instance, in the event of a collision between a procedure triggered for initiating an emergency PDU session and a network-initiated de-registration procedure, UE procedural actions are not consistently specified. For example, as per TS24.501, it is specified that MRU and SR procedures will be aborted, but it is not clear if the upper layer should be informed about the registration failure that is triggered due to the emergency PDU session, regardless of whether the session is successfully established.

Under a first proposed scheme in accordance with the present disclosure, the UE 110 interfacing with a network, such as the wireless network 120, may determine that there is a collision between an MRU procedure triggered for initiating an emergency PDU session and a network-initiated de-registration procedure. In such a scenario, the UE 110 may perform one or more operations to remedy the collision. In a first operation, a UE non-access-stratum (NAS) layer in a 5th Generation Mobility Management (5GMM) protocol stack as implemented in the UE 110 may inform one or more upper layers of the 5GMM protocol stack of a failure of the MRU procedure for accessing the network, such that an upper layer of the 5GMM protocol stack initiates a mechanism for remedying the failure. For example, the upper layer may implement procedures specified in 3GPP TS 24.229 that result in an emergency call being attempted to another network, such as an Internet Protocol-connectivity access network (IP-CAN).

In a second operation, the UE 110 may perform a de-registration locally or with the network (if not de-registered already). For example, the de-registration with the network may be performed as specified in TS24.501 section 5.5.2.3. Following the de-registration, the UE 110 may further attempt an initial registration for emergency services with the network. It will be appreciated that in some implementations, the first and the second operations may be performed in the alternative.

In a third operation, the UE 110 may perform a de-registration locally or with the network (if not de-registered already). For example, the de-registration with the network may be performed as specified in TS24.501 section 5.5.2.3. Following the de-registration, the UE 110 may further attempt an initial registration procedure with the network to establish emergency services in the network (e.g., a public land mobile network (PLMN)) or an equivalent network.

In a fourth operation, the UE 110 may attempt to select an Evolved Universal Mobile Telecommunications System (UMTS) Terrestrial Radio Access (E-UTRA) cell connected to an Evolved Packet Core (EPC) or a 5th Generation Core Network (5GCN) of the network. In a fifth operation, the UE 110 may abort the de-registration procedure irrespective of 5GMM cause value and proceed with the MRU procedure for establishing the PDU session for emergency services.

Under a second proposed scheme in accordance with the present disclosure, the UE 110 interfacing with a network, such as the wireless network 120, may determine that there is a collision between an SR procedure triggered for initiating an emergency PDU session and a network-initiated de-registration procedure. In such a scenario, the UE 110 may perform one or more operations to remedy the collision. In a first operation, a UE non-access-stratum (NAS) layer in a 5th Generation Mobility Management (5GMM) protocol stack as implemented in the UE 110 may inform one or more upper layers of the 5GMM protocol stack of a failure of the SR procedure for accessing the network, such that an upper layer of the 5GMM protocol stack initiates a mechanism for remedying the failure. For example, the upper layer may implement procedures specified in 3GPP TS 24.229 that result in an emergency call being attempted to another network, such as an IP-CAN.

In a second operation, the UE 110 may perform a de-registration locally or with the network (if not de-registered already). For example, the de-registration with the network may be performed as specified in TS24.501 section 5.5.2.3. Following the de-registration, the UE 110 may further attempt an initial registration for emergency services with the network. It will be appreciated that in some implementations, the first and the second operations may be performed in the alternative.

In a third operation, the UE 110 may perform a de-registration locally or with the network (if not de-registered already). For example, the de-registration with the network may be performed as specified in TS24.501 section 5.5.2.3. Following the de-registration, the UE 110 may further attempt an initial registration procedure to establish the emergency PDU session in the network (e.g., a PLMN) or an equivalent network.

In a fourth operation, the UE 110 may attempt to select an Evolved Universal Mobile Telecommunications System (UMTS) Terrestrial Radio Access (E-UTRA) cell connected to an Evolved Packet Core (EPC) or a 5th Generation Core Network (5GCN) of the network. In a fifth operation, the UE 110 may abort the de-registration procedure irrespective of 5GMM cause value and proceed with the SR procedure for establishing the PDU session for emergency services.

Under a third proposed scheme in accordance with the present disclosure, the UE 110 interfacing with an evolved packet system (EPS) of a network, such as the wireless network 120, may determine that there is a collision between an EPS mobility management (EMM) tracking area update procedure or a SR procedure triggered for initiating a packet data network (PDN) connection for emergency bearer services and a network-initiated detach procedure. In such a scenario, the UE 110 may perform one or more operations to remedy the collision.

In a first operation, a UE non-access-stratum (NAS) layer in an EPS protocol stack as implemented in the UE 110 may inform one or more upper layers of the EPS protocol stack of a failure of the tracking area update procedure or the SR procedure, such that an upper layer of the EPS protocol stack initiates a mechanism for remedying the failure. The upper layer of the EPS protocol stack may implement one or more procedures that result in an emergency call being attempted to an additional network. For example, the additional network may be an IP-CAN. In another example, the upper layer may establish a circuit-switched (CS) emergency call. In yet another example, the upper layer may implement one or more procedures specified in 3GPP TS 24.229 and 3GPP TS 24.167. In a second operation, the UE 110 may perform a local detach (if not detached already). Following the detachment, the UE 110 may further attempt an EPS attach for emergency bearer services in the network or an equivalent network. For example, the network or the equivalent network may be a PLMN. It will be appreciated that in some implementations, the first and the second operations may be performed in the alternative.

### Illustrative Implementations

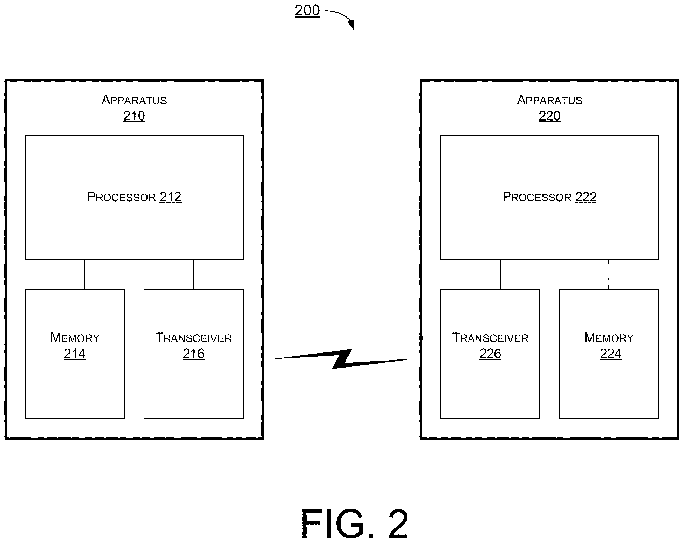

FIG. 2 illustrates an example communication system 200 having at least an example apparatus 210 and an example apparatus 220 in accordance with an implementation of the present disclosure. Each of apparatus 210 and apparatus 220 may perform various functions to implement schemes, techniques, processes and methods described herein pertaining to UE behavior for collisions between network-initiated de-registration/detachment and emergency service procedures in mobile communications, including the various schemes described above with respect to various proposed designs, concepts, schemes, systems and methods described above, including network environment 100, as well as processes described below.

Each of apparatus 210 and apparatus 220 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 210 and apparatus 220 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 210 and apparatus 220 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 210 and apparatus 220 may be implemented in a smart thermostat, a smart fridge, a smart door lock, a wireless speaker or a home control center. When implemented in or as a network apparatus, apparatus 210 and/or apparatus 220 may be implemented in an eNodeB in an LTE, LTE-Advanced or LTE-Advanced Pro network or in a gNB or TRP in a 5G network, an NR network, or an loT network.

In some implementations, each of apparatus 210 and apparatus 220 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 210 and apparatus 220 may be implemented in or as a network apparatus or a UE. Each of apparatus 210 and apparatus 220 may include at least some of those components shown in FIG. 2 such as a processor 212 and a processor 222, respectively, for example. Each of apparatus 210 and apparatus 220 may further include one or more other components not pertinent to the proposed scheme of the present disclosure (e.g., internal power supply, display device and/or user interface device), and, thus, such component(s) of apparatus 210 and apparatus 220 are neither shown in FIG. 2 nor described below in the interest of simplicity and brevity.

In one aspect, each of processor 212 and processor 222 may be implemented in the form of one or more single-core processors, one or more multi-core processors, or one or more CISC or RISC processors. That is, even though a singular term "a processor" is used herein to refer to processor 212 and processor 222, each of processor 212 and processor 222 may include multiple processors in some implementations and a single processor in other implementations in accordance with the present disclosure. In another aspect, each of processor 212 and processor 222 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 212 and processor 222 is a special-purpose machine specifically designed, arranged, and configured to perform specific tasks including those pertaining to UE behavior for collisions between network-initiated de-registration/detachment and emergency service procedures in mobile communications in accordance with various implementations of the present disclosure.

In some implementations, apparatus 210 may also include a transceiver 216 coupled to processor 212. Transceiver 216 may be capable of wirelessly transmitting and receiving data. In some implementations, transceiver 216 may be capable of wirelessly communicating with different types of wireless networks of different radio access technologies (RATs). In some implementations, transceiver 216 may be equipped with a plurality of antenna ports (not shown) such as, for example, four antenna ports. That is, transceiver 216 may be equipped with multiple transmit antennas and multiple receive antennas for multiple-input multiple-output (MIMO) wireless communications. In some implementations, apparatus 220 may also include a transceiver 226 coupled to processor 222. Transceiver 226 may include a transceiver capable of wirelessly transmitting and receiving data. In some implementations, transceiver 226 may be capable of wirelessly communicating with different types of UEs/wireless networks of different RATs. In some implementations, transceiver 226 may be equipped with a plurality of antenna ports (not shown) such as, for example, four antenna ports. That is, transceiver 226 may be equipped with multiple transmit antennas and multiple receive antennas for MIMO wireless communications.

In some implementations, apparatus 210 may further include a memory 214 coupled to processor 212 and capable of being accessed by processor 212 and storing data therein. In some implementations, apparatus 220 may further include a memory 224 coupled to processor 222 and capable of being accessed by processor 222 and storing data therein. Each of memory 214 and memory 224 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 214 and memory 224 may include a type of read-only memory (ROM) such as mask ROM, programmable ROM (PROM), erasable programmable ROM (EPROM) and/or electrically erasable programmable ROM (EEPROM). Alternatively, or additionally, each of memory 214 and memory 224 may include a type of non-volatile random-access memory (NVRAM) such as flash memory, solid-state memory, ferroelectric RAM (FeRAM), magnetoresistive RAM (MRAM) and/or phase-change memory.

Each of apparatus 210 and apparatus 220 may be a communication entity capable of communicating with each other using various proposed schemes in accordance with the present disclosure. For illustrative purposes and without limitation, a description of capabilities of apparatus 210, as a UE (e.g., UE 110), and apparatus 220, as a network node (e.g., network node 125) of a network (e.g., wireless network 120 as a 5G/NR mobile network), is provided below.

Under one proposed scheme in accordance with the present disclosure pertaining to UE behavior for collisions between network-initiated de-registration/detachment and emergency service procedures in mobile communications, processor 212 of apparatus 210, implemented in or as UE 110, may determine that an MRU procedure triggered for initiating an emergency PDU session collides with a network-initiated de-registration procedure while the UE 110 interfaces with a wireless network. Moreover, responsive to the determining, processor 212 may perform one or more operations comprising a UE NAS layer in a 5GMM protocol stack informing one or more upper layers of the 5GMM protocol stack of a failure of the MRU procedure for accessing the network such that an upper layer of the 5GMM protocol stack initiates a mechanism for remedying the failure, or performing a local de-registration (if not de-registered already) and attempting an initial registration for emergency services in the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish emergency services in the network or an equivalent network. For example, the network or the equivalent network may be a PLMN.

In some implementations, the one or more operations may further comprise selecting an E-UTRA cell connected to an EPC or a 5GCN of the network.

In some implementations, the one or more operations further comprise aborting the de-registration procedure irrespective of 5GMM cause value and proceeding with the MRU procedure for establishing the PDU session for emergency services.

Under another proposed scheme in accordance with the present disclosure, processor 212 of apparatus 210, implemented in or as UE 110, may determine that an SR procedure triggered for initiating an emergency PDU session collides with a network-initiated de-registration procedure while the UE 110 interfaces with a wireless network. Moreover, responsive to the determining, processor 212 may perform one or more operations comprising a UE NAS layer in a 5GMM protocol stack informing one or more upper layers of the 5GMM protocol stack of a failure of the SR procedure for accessing the network such that an upper layer of the 5GMM protocol stack initiates a mechanism for remedying the failure, or performing a local de-registration (if not de-registered already) and attempting an initial registration for emergency services in the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations further comprise selecting an E-UTRA cell connected to an EPC or a 5GCN of the network.

In some implementations, the one or more operations may further comprise aborting the de-registration procedure irrespective of 5GMM cause value and proceeding with the SR procedure for establishing the PDU session for emergency services.

Under an additional proposed scheme in accordance with the present disclosure, processor 212 of apparatus 210, implemented in or as UE 110, may determine that an EMM tracking area update procedure or a SR procedure triggered for initiating a PDN connection for emergency bearer services collides with a network-initiated detach procedure while the UE 110 interfaces with the wireless network. Moreover, responsive to the determining, processor 212 may perform one or more operations comprising a UE NAS layer in an EPS protocol stack informing one or more upper layers of the EPS protocol stack of a failure of the tracking area update procedure or the SR procedure such that an upper layer of the EPS protocol stack initiates a mechanism for remedying the failure, or performing a local detach (if not detached already) and attempting an EPS attach for emergency bearer services in the network or an equivalent network. For example, the network or the equivalent network may be a PLMN. The upper layer may implement one or more procedures that result in an emergency call being attempted to an additional network. For example, the additional network may be an IP-CAN. In some implementations, the upper layer may establish a CS emergency call. In some implementations, the one or more procedures may be specified in 3GPP TS 24.229 and 3GPP TS 24.167.

### Illustrative Processes

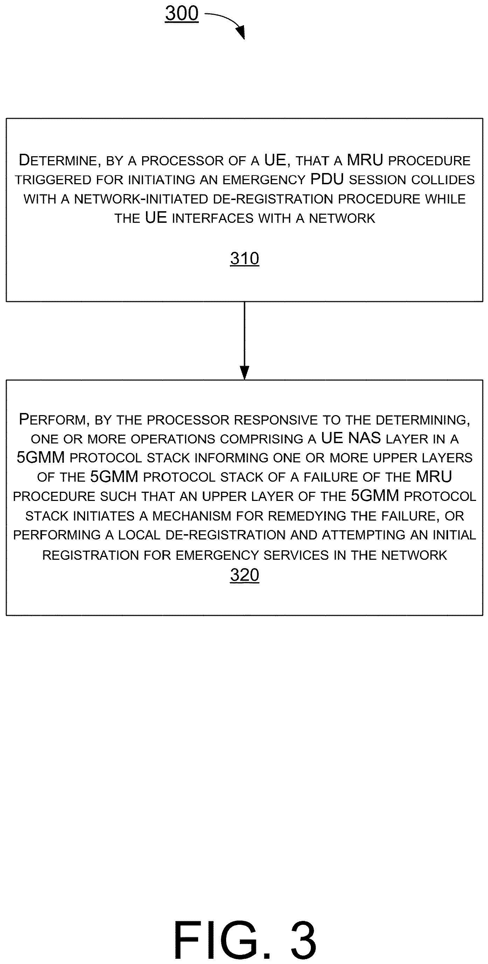

FIG. 3 illustrates an example process 300 in accordance with an implementation of the present disclosure. Process 300 may represent an aspect of implementing various proposed designs, concepts, schemes, systems and methods described above, whether partially or entirely, including those pertaining to those described above. More specifically, process 300 may represent an aspect of the proposed concepts and schemes pertaining to UE behavior for collisions between network-initiated de-registration/detachment and emergency service procedures in mobile communications. Process 300 may include one or more operations, actions, or functions as illustrated by one or more of blocks 310 and 320. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. Furthermore, one or more of the blocks/sub-blocks of process 300 may be executed iteratively. Process 300 may be implemented by or in apparatus 210 and apparatus 220 as well as any variations thereof. Solely for illustrative purposes and without limiting the scope, process 300 is described below in the context of apparatus 210 as a UE (e.g., UE 110) and apparatus 220 as a communication entity such as a network node or base station (e.g., network node 125) of a network (e.g., wireless network 120). Process 300 may begin at block 310.

At 310, process 300 may involve processor 212 of apparatus 210 determining that an MRU procedure triggered for initiating an emergency PDU session collides with a network-initiated de-registration procedure while the UE interfaces with the network. Process 300 may proceed from 310 to 320.

At 320, process 300 may involve processor 212 performing, responsive to the determining, one or more operations. In some implementations, the one or more operations may comprise a UE NAS layer in a 5GMM protocol stack informing one or more upper layers of the 5GMM protocol stack of a failure of the MRU procedure for accessing the network such that an upper layer of the 5GMM protocol stack initiates a mechanism for remedying the failure, or performing a local de-registration (if not de-registered already) and attempting an initial registration for emergency services in the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish emergency services in the network or an equivalent network. For example, the network or the equivalent network may be a PLMN.

In some implementations, the one or more operations may further comprise selecting an E-UTRA cell connected to an EPC or a 5GCN of the network.

In some implementations, the one or more operations further comprise aborting the de-registration procedure irrespective of 5GMM cause value and proceeding with the MRU procedure for establishing the PDU session for emergency services.

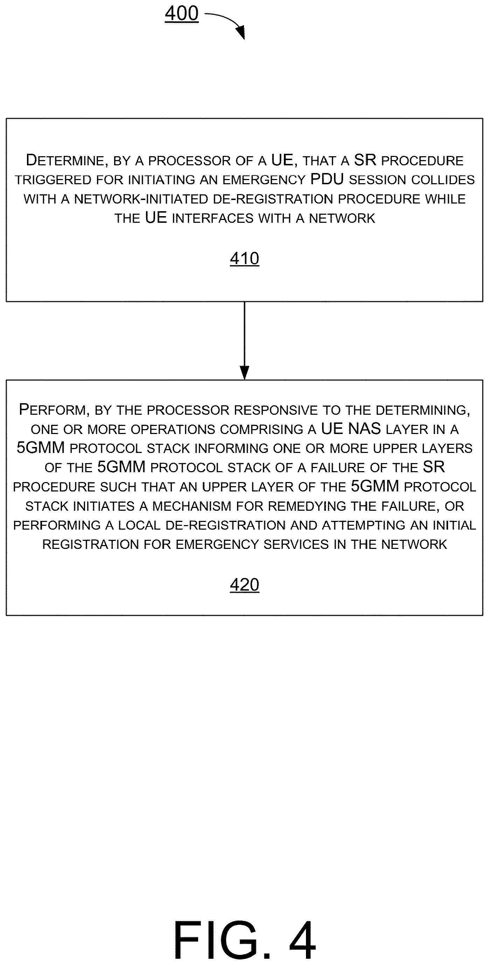

FIG. 4 illustrates an example process 400 in accordance with an implementation of the present disclosure. Process 400 may represent an aspect of implementing various proposed designs, concepts, schemes, systems and methods described above, whether partially or entirely, including those pertaining to those described above. More specifically, process 400 may represent an aspect of the proposed concepts and schemes pertaining to UE behavior for collisions between network-initiated de-registration/detachment and emergency service procedures in mobile communications. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed iteratively. Process 400 may be implemented by or in apparatus 210 and apparatus 220 as well as any variations thereof. Solely for illustrative purposes and without limiting the scope, process 400 is described below in the context of apparatus 210 as a UE (e.g., UE 110) and apparatus 220 as a communication entity such as a network node or base station (e.g., network node 125) of a network (e.g., wireless network 120). Process 400 may begin at block 410.

At 410, process 400 may involve processor 212 of apparatus 210 determining that an SR procedure triggered for initiating an emergency PDU session collides with a network-initiated de-registration procedure while the UE interfaces with the network. Process 400 may proceed from 410 to 420.

At 420, process 400 may involve processor 212 performing, responsive to the determining, one or more operations. In some implementations, the one or more operations may comprise a UE NAS layer in a 5GMM protocol stack informing one or more upper layers of the 5GMM protocol stack of a failure of the SR procedure for accessing the network such that an upper layer of the 5GMM protocol stack initiates a mechanism for remedying the failure, or performing a local de-registration (if not de-registered already) and attempting an initial registration for emergency services in the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations further comprise selecting an E-UTRA cell connected to an EPC or a 5GCN of the network.

In some implementations, the one or more operations may further comprise aborting the de-registration procedure irrespective of 5GMM cause value and proceeding with the SR procedure for establishing the PDU session for emergency services.

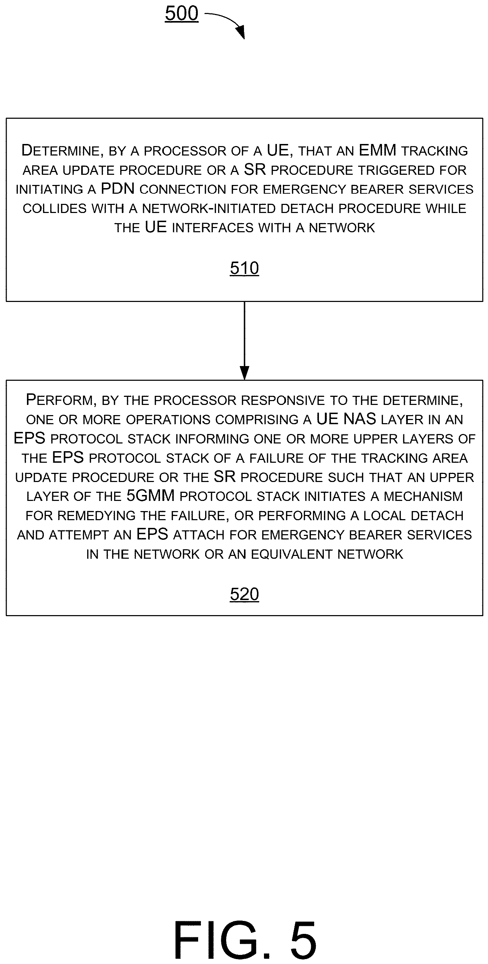

FIG. 5 illustrates an example process 500 in accordance with an implementation of the present disclosure. Process 500 may represent an aspect of implementing various proposed designs, concepts, schemes, systems and methods described above, whether partially or entirely, including those pertaining to those described above. More specifically, process 500 may represent an aspect of the proposed concepts and schemes pertaining to UE behavior for collisions between network-initiated de-registration/detachment and emergency service procedures in mobile communications. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. Furthermore, one or more of the blocks/sub-blocks of process 500 may be executed iteratively. Process 500 may be implemented by or in apparatus 210 and apparatus 220 as well as any variations thereof. Solely for illustrative purposes and without limiting the scope, process 500 is described below in the context of apparatus 210 as a UE (e.g., UE 110) and apparatus 220 as a communication entity such as a network node or base station (e.g., network node 125) of a network (e.g., wireless network 120). Process 500 may begin at block 510.

At 510, process 500 may involve processor 212 of apparatus 210 determining that an EMM tracking area update procedure or an SR procedure triggered for initiating a PDN connection for emergency bearer services collides with a network-initiated detach procedure while the UE interfaces with the network. Process 500 may proceed from 510 to 520.

At 520, process 500 may involve processor 212 performing, responsive to the determining, one or more operations. In some implementations, the one or more operations may comprise a UE NAS layer in an EPS protocol stack informing one or more upper layers of the EPS protocol stack of a failure of the tracking area update procedure or the SR procedure such that an upper layer of the EPS protocol stack initiates a mechanism for remedying the failure, or performing a local detach (if not detached already) and attempting an EPS attach for emergency bearer services in the network or an equivalent network. For example, the network or the equivalent network may be a PLMN. The upper layer may implement one or more procedures that result in an emergency call being attempted to another network. For example, the additional network may be an IP-CAN. In some implementations, the upper layer may establish a CS emergency call. In some implementations, the one or more procedures may be specified in 3GPP TS 24.229 and 3GPP TS 24.167.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
determining, by a processor of a user equipment, in the following also referred to as UE, that a mobility and periodic registration update, in the following also referred to as MRU, procedure triggered for initiating an emergency PDU session collides with a network-initiated de-registration procedure while the UE interfaces with a network (310); and
performing, by the processor responsive to the determining, one or more operations (320),
wherein the one or more operations comprise a UE non-access-stratum, in the following also referred to as NAS, layer in a 5th Generation Mobility Management, in the following also referred to as 5GMM, protocol stack informing one or more upper layers of the 5GMM protocol stack of a failure of the MRU procedure for accessing the network, such that an upper layer of the 5GMM protocol stack initiates a mechanism for remedying the failure, or performing a local de-registration and attempting an initial registration for emergency services in the network.

2. A method, comprising:
determining, by a processor of a user equipment, in the following also referred to as UE, that a service request, in the following also referred to as SR, procedure triggered for initiating an emergency PDU session collides with a network-initiated de-registration procedure while the UE interfaces with a network (410); and
performing, by the processor responsive to the determining, one or more operations (420),
wherein the one or more operations comprise a UE non-access-stratum, in the following also referred to as NAS, layer in a 5th Generation Mobility Management, in the following also referred to as 5GMM, protocol stack informing one or more upper layers of the 5GMM protocol stack of a failure of the SR procedure for accessing the network such that an upper layer of the 5GMM protocol stack initiates a mechanism for remedying the failure, or performing a local de-registration and attempting an initial registration for emergency services in the network.

3. The method of Claim 1 or 2, wherein the upper layer of the 5GMM protocol stack implements one or more procedures that result in an emergency call being attempted to an additional network.

4. The method of Claim 3, wherein the additional network is an Internet Protocol-connectivity access network, in the following also referred to as IP-CAN.

5. The method of Claim 3 or 4, wherein the one or more procedures are specified by 3GPP TS 24.229.

6. The method of any one of Claims 1 to 5, wherein the one or more operations further comprise performing a local de-registration and attempting an initial registration procedure to establish emergency services and/or the emergency PDU session in the network or an equivalent network.

7. The method of Claim 6, wherein the network or the equivalent network is a public land mobile network, in the following also referred to as PLMN.

8. The method of any one of Claims 1 to 7, wherein the one or more operations further comprise selecting an Evolved Universal Mobile Telecommunications System, in the following also referred to as UMTS, Terrestrial Radio Access, in the following also referred to as E-UTRA, cell connected to an Evolved Packet Core, in the following also referred to as EPC, or a 5th Generation Core Network, in the following also referred to as 5GCN, of the network.

9. The method of Claim 1 or any one of Claims 3 to 8 being directly or indirectly dependent on Claim 1, wherein the one or more operations further comprise aborting the de-registration procedure irrespective of 5GMM cause value and proceeding with the MRU procedure for establishing the PDU session for emergency services; or
the method of Claim 2 or any one of Claims 3 to 8 being directly or indirectly dependent on Claim 2, wherein the one or more operations further comprise aborting the de-registration procedure irrespective of 5GMM cause value and proceeding with the SR procedure for establishing the PDU session for emergency services.

10. A method, comprising:
determining, by a processor of a user equipment, in the following also referred to as UE, that an evolved packet system, in the following also referred to as EPS, mobility management, in the following also referred to as EMM, tracking area update procedure or a service request, in the following also referred to as SR, procedure triggered for initiating a packet data network, in the following also referred to as PDN, connection for emergency bearer services collides with a network-initiated detach procedure while the UE interfaces with the network (510); and
performing, by the processor responsive to the determining, one or more operations (520),
wherein the one or more operations comprise a UE non-access-stratum, in the following also referred to as NAS, layer in an EPS protocol stack informing one or more upper layers of the EPS protocol stack of a failure of the tracking area update procedure or the SR procedure for accessing the network such that an upper layer of the EPS protocol stack initiates a mechanism for remedying the failure, or performing a local detach and attempting an EPS attach for emergency bearer services in the network or an equivalent network.

11. The method of Claim 10, wherein the upper layer of the EPS protocol stack implements one or more procedures that result in an emergency call being attempted to an additional network.

12. The method of Claim 11, wherein the upper layer of the EPS protocol stack establishes a circuit-switched, in the following also referred to as CS, emergency call.

13. The method of Claim 11 or 12, wherein the additional network is an Internet Protocol-connectivity access network, in the following also referred to as IP-CAN.

14. The method of any one of Claims 11 to 13, wherein the one or more procedures are specified by 3GPP TS 24.229 and 3GPP TS 24.167.

15. The method of any one of Claims 10 to 14, wherein the network or the equivalent network is a public land mobile network, in the following also referred to as PLMN.
